Europäisches Patentamt

European Patent Office

Office européen des brevets

(19)

(11) **EP 1 553 055 A1**

(12) **EUROPEAN PATENT APPLICATION**

(43) Date of publication:
**13.07.2005 Bulletin 2005/28**

(51) Int Cl.7: **C02F 1/44**, C02F 1/78,
C02F 9/02
// C02F1/28, C02F9/04

(21) Application number: **04000105.9**

(22) Date of filing: **07.01.2004**

| | |
|---|---|
| (84) Designated Contracting States:<br>**AT BE BG CH CY CZ DE DK EE ES FI FR GB GR<br>HU IE IT LI LU MC NL PT RO SE SI SK TR**<br>Designated Extension States:<br>**AL LT LV MK** | • **Cohen, Avraham**<br> **Jerusalem 96956 (IL)**<br>• **Tanny, Gerald Dr.**<br> **76310 Rehovot (IL)**<br>• **Frenk, Hella**<br> **44480 Kfar-Saba (IL)** |
| (71) Applicant: **HomeFlow Switzerland Distribution<br>SA<br>6300 Zug (CH)** | (74) Representative: **Müller, Christoph Emanuel et al**<br>**Hepp, Wenger & Ryffel AG,**<br>**Friedtalweg 5**<br>**9500 Wil (CH)** |
| (72) Inventors:<br>• **Zyser, Daniel<br>23800 Givaat Ela (IL)** | |

(54) **Apparatus and method for purifying water**

(57)     An apparatus (1) and a method for purifying water make use of an ozone reaction chamber (11) for pre-treatment of the water with ozone (O) followed by an activated carbon filter (51) for pre-treatment of the water prior to filtration with a submicron membrane filter (55).

In a second embodiment, the raw water to be treated is first passed through a first active carbon filter (6), ozone-treated and passed through a second active carbon filter (51). The water treated in this manner is then filtered in the submicron membrane filter.

FIG.1

EP 1 553 055 A1

## Description

The invention relates to an apparatus and a method for purifying water according to the preamble of the independent patent claims.

It is known to purify water by pre-treating the water and to finally filter the pre-treated water in a membrane system.

Submicron filters for the purpose of purifying water from microbiological contaminants are well known in the art. Such filters are used e.g. to purify water from contaminants greater than 0,2 microns, such as bacteria, cysts, and amoebae.

EP 539 069 discloses a hollow fine fibre filter in a housing suitable for mounting on a domestic drinking water faucet.

Larger dead-end filtration systems made up of many filter cartridges and housings are used on the inlet to water purifica tion systems of pharmaceutical and electronic plants. Due to the presence of sediment and colloidal particulates in the water, the major problem with such membrane systems is that they are very expensive and prone to a short useful lifetime and a rapid degradation of the flow rate. It is thus known to protect such systems by pre-filtration systems to maintain their flow rate and throughput, i.e. the total volume of water which can be processed at an acceptable level. A similar related problem is also known in crossflow mode systems such as ultrafiltration or reverse osmosis. This problem, also known as membrane fouling, is, especially in the latter case, related to the presence of naturally occurring organic colloids which are known as humates.

It has been known to protect the throughput of membrane filters by first treating the water by means of a concentric combination of carbon prefilters. These carbon pre-filters are followed by submicron filters. Such a method is e.g. disclosed in US 4 913 808. This system is adapted to be used in a kitchen sink faucet with easy interchange of a combination cartridge.

Wiseburgh et al (see EP 1 034 138) have shown that improvement in the throughput of microporous membranes can be achieved by operating a combination in series of a prefilter and microfilter at a constant flow velocity which is in an appropriate range.

It is also known to use ozonation technology as a chemical oxidant in water purification. This technology has been used as part of conventional, large scale drinking water treatment processes for a number of purposes including the removal of inorganic species, coagulation flocculation-decantation processes, oxidation of natural organic matter, and other micropollutants and for final microbial disinfection. This is shown e.g. by Camel V. and Bermond A., "The use of ozone and associated oxidation processes in drinking water treatment", Wat. Res., Vol. 32, pp. 3208 - 3222 (1998).

Domestic drinking water purifiers incorporating an ozonation stage are also known from US 6 312 588. There is disclosed an apparatus with a prefiltration stage, an ozonation stage, and a post-filtration stage. In the prefiltration stage, the raw water is passed through a serial filter constructed from layers of a porous media, calcium bentonite, zeolite, activated carbon, and a final layer of porous media. The raw water, now treated to remove sediment, oils, pesticides and other oxidizable matter, is batch ozonated in a reaction chamber for a period of time. In a final stage, the ozone-treated water is pumped through a post-ozonation filter consisting of activated carbon and porous medium to remove any residual ozone, trace levels of herbicides, pesticides, and other organic chemical pollutant, sediment or pollutants flocculated by the ozonation process. The water is either stored in the treated water reservoir or it is dispensed directly.

US 5 683 576 discloses a domestic water treatment apparatus that integrates an ozone generator, a contact treatment chamber and storage tanks, and a microcontroller to treat water in accordance with the EPA testing protocol under the federal insecticide, fungicide, and rodenticide act (FIFRA). The raw water is passed through a pre-treatment filter to a reaction chamber. Ozone, in the form of an air-ozone mixture, is dissolved in the reaction chamber in order to kill bacteria, viruses, and other microorganisms. The ozone concentration in the air-ozone mixture is specified to be in excess of 0.5% (wt/wt).

US 6 475 352 discloses a method and an apparatus for monitoring an ozone generator in a household water purifier. The apparatus may be used for purifying and disinfecting water by means of ozone. The apparatus comprises a water inlet followed by a filter assembly of two or more filter elements, preferably with a granulated carbon prefilter and a carbon block main filter, an ozone source and a water treatment reactor. The apparatus may also contain an activated carbon polishing filter to remove compounds present in the water after a treatment cycle.

A complex pre-treatment process made up of coagulation-flocculation by dosing with poly-aluminium chloride and an anionic polyelectrolyte, decantation (settling), ozonation of settled water at a level of 0.5 to 1 mg/L ozone, and filtration through dual layer anthracite/sand filters followed by injection of an anti-scalant and filtration through six-micron cartridge prefilters has been described for the very large scale pre-treatment of river water to be finally filtered by submicron nanofiltration membranes. (Ventresque C., Gisclon V., Bablon G., and Chagneau G., "An outstanding feat of modern technology: the Mery-sur-Oise nanofiltration treatment plant (340'000 cu.m./d)", Proceedings of the Conference on Membranes in Drinking and Industrial Water Production, Vol. 1, pp. 1-16, ISBN 0-86689-060-2, Desalination Publications, L' Aquila, Italy (2000)). No specific information is given as to the role of the ozonation step.

M. Hashino et al. (see "Proceedings of the Con ference on Membranes in Drinking and Industrial Water Production", Vol. 1, pages 629 - 636, ISBN 0-86689-060-2) has disclosed an advanced water treatment system using ozone pre-treatment and ozone-resistant microfiltration tangential flow modules. The use of ozone for maintaining a high membrane filtration flux is disclosed in the context of large drinking water purification plants. It requires an ozone generator with an oxygen source and a capability of generating 20g ozone per hour, and special ozone resistant microfiltration membranes, able to withstand continuous exposure to a minimum of 0.3 mg/L of ozone. Such a system is not suitable for point-of-use application. Shioyama et al. ("Proceedings of the Conference on Membranes in Drinking and Industrial Water Production", Vol. 1, pages 283 - 289) disclose the development of an advanced submerged ceramic membrane filtration system with a complex pre-treatment system consisting of ozonation of the water with 1-2 mg/L of ozone, exposure to a dispersion of powdered activated carbon, and dosing with polyaluminum chloride.

As may be understood from all of the above, the major problem of all such conventional submicron membrane pre-treatment processes is the limited throughput of water filtered by a relatively large and expensive surface area of a submicron membrane. In the course of time the membrane must either be cleaned or discarded and replaced with a new filter element. Current methods to avoid such an occurrence are complex, expensive, and only applicable to large systems.

It is therefore an object of the present invention to avoid the drawbacks of the prior art, namely, to provide an apparatus and a method for purifying water with a submicron membrane arrangement containing a relatively small surface area of membrane, and nonetheless displaying an increased throughput and improved long-term system stability for low cost of operation. The apparatus should be suitable even for home or office use and therefore should be limited in size. It further should be possible to produce the apparatus in a simple and economic manner.

According to the present invention, these and other objects are solved with an apparatus and a method according to the independent claims.

The apparatus for purifying water comprises an ozone reaction chamber, preferably a batch type chamber, for treatment of the water with ozone gas and at least one filtering device. This filtering device is a submicron membrane filter that is arranged after the ozone reaction chamber.

The apparatus is preferably used for treatment of a predetermined water volume. The apparatus may comprise means to generate in-situ either an air-ozone or an oxygen-ozone gas mixture. There further are provided means with which the water in the reaction chamber may be treated with the oxygen-ozone or air-ozone gas mixture for a predetermined exposure time period. Furthermore, there are also provided means to pump the ozone-treated water from the ozone reaction chamber towards the filtering device.

Further, the apparatus comprises at least another filtering device realized by an activated carbon filter. This activated carbon filter is placed before or after the ozone reaction chamber but still before the submicron membrane filter respective to the flow direction of the water. It has been found by the inventors of the present invention that, by ozonation filtration of the water by an activated carbon filter prior to the submicron membrane filter purification treatment, the throughput of the submicron membrane filter prior to either disposal or cleaning can be significantly increased.

In the context of the present invention, a submicron membrane filter is typically a pressurizable housing containing a membrane filter element with a pore size no greater than 0.8 micron and includes ultrafiltration and reverse osmosis membranes. Such membrane filters are known in the art to be fabricated from organic or inorganic polymeric materials, which are integrally sealed into filter elements in a variety of geometries, including flat sheet, spiral wound, tubular, and hollow fine fiber.

It is understood that the above described apparatus may be provided with valves and tubing as is necessary and known in the art to hydraulically connect and isolate the flow through the elements comprising the apparatus, and to control the liquid levels in filling and emptying the ozone reaction chamber.

Preferably, the apparatus further comprises electrically activated means of pumping, opening and closing valves, and sensing liquid levels in the ozone reaction chamber. Further, a programmable computer or a microprocessor, for which appropriate operating programs are provided, controls the operation of said means, as well as the time of operation of the means for ozone gas generation. Preferably, the apparatus also contains feedback means to alert the user as to ozone system malfunction, or the need to finally change the filter element or ele ments. Preferably, these feedback means are of an electrical or electronic nature and are monitored by the programmable computer or microprocessor so as to control the system operation and disable the dispense of purified water if necessary.

The ozone reaction chamber may be hydraulically connected to a pump followed by the activated carbon filter element in a housing. Still in the context of the present invention, an activated carbon filter is preferably a tubular shaped activated carbon block with a pore size smaller than 5 micron, which is sealed with dead-ended geometry within a filter housing. The outer face of the tubular block is on the inlet side of the housing, while the center of the block leads to the filter housing outlet.

According to a preferred embodiment of the invention, the apparatus further comprises a sediment removal filter element and housing which is in series arrangement with the raw water inlet of said apparatus and is located prior to the inlet of the ozone reaction chamber and the active carbon filter. According to a further preferred embodiment, the sediment removal filter and the activated carbon filter can be combined into a single post-ozonation treatment filter element by wrapping the outer face of the activated carbon block with one or more layers of a polymeric non-woven fabric or a microfiberglass filtration media.

According to a further preferred embodiment of the invention, an activated carbon filter is arranged before (i.e. upstream) as well as after (i.e. downstream) the ozone reaction chamber, such that the ozone reaction chamber is situated between these two activated carbon filters. It has been found by the inventors that certain fractions of naturally occurring organic matter present in water are capable of passing even through very efficient activated carbon filters. Such matter thus cannot be easily removed prior to submicron membrane filtration by means of activated carbon filters alone. It has further been found that ozonation of water followed by filtering by an activated carbon block leads to a significant drop in the clogging potential of the water toward submicron membranes, as measured by the Silt Density Index, or SDI. The Silt Density Index is defined in this context as the % decay of the flow rate per minute of a standard 0.45 micron microporous membrane operated at a pressure of 2 bar within a five minute period of time, i.e. equal to $100\% \times (\text{Flowrate}_{t1} - \text{Flowrate}_{t2})/ \{\text{Flowrate}_{t1} \times (t_2 - t_1)\}$, where $t_2 - t_1 = 5$ minutes.

It has been found that, in the manner of the present invention, ozonation of the water does not change the concentration of the total organic carbon in the water. The organic material remains in solution after ozonation, but in a chemically modified form. In this chemically modified form, the material is more easily removed by filtration through an activated carbon filter as described above. By means of such treatment, the Silt Density Index of the water can be reduced even to a point where a given surface area of a 0,2 micron microporous membrane filtering such water had a three to ten times increased throughput, as compared to identical filters filtering water pre-treated only with a similar carbon filter (without ozonation). Thus, the throughput for a 0.2 micron membrane filter with an area of only 300 cm$^2$ operating on water pre-treated in accordance with the instant invention with both activated carbon and ozone, may be typically between 6 - 10 m$^3$ of water, compared to 1< m$^3$ for the same filter operating on water pre-treated only by filtration through the activated carbon filter.

According to a preferred embodiment of the invention, the ozone reaction chamber is in the form of a bubble reactor column. In addition, the apparatus of the instant invention comprises means for the generation of ozone-enriched air to be introduced as a stream of small bubbles into the bottom of the reactor column. According to a further preferred embodiment, the bubble reactor column may have a porous bubble stone to create the small stream of bubbles, which is preferably arranged at the bottom of the column. Such a design is very simple in its construction.

Preferably, the bubble reactor column has a ratio of height to diameter of more than five to one, which assures that a significant proportion of the ozone introduced has sufficient time to dissolve in the water prior to exiting through appropriate valves provided at the top of the reaction chamber. Of course, other ozone reaction chambers known to those skilled in the art might also be used. For example, as in continuous flow reactors, the air could be forced into a venturi to dissolve in the water.

Typically, the means for generation of ozone-enriched air may have an air pump that provides the motive force to cause air (which contains oxygen) to flow through an electrically powered ozone generator and the bubbler means in the reaction chamber.

The ozone generator converts a portion of the oxygen into ozone, which is preferably at an ozone concentration in the air of less than 0,45% ozone (wt/wt). In view of the suitability for a point of use application, the ozone generator has relatively small outer dimensions and a relatively small generation capacity. A generator, including all of its operational elements, being smaller than 20 centimeters by 20 centimeters by 10 centimeters depth and having an operating power of 500W or less may typically be used. Depending on their design, the ozone output of such ozone generators is between 0.1 - 1.5 grams of ozone per hour.

In a further preferred embodiment, a storage chamber may be provided subsequent to the ozone reaction chamber together with means to transfer the ozone-treated water to said storage chamber. Furthermore, said storage chamber may be provided with heat exchange means and appropriate temperature controls as known in the art to provide chilling of the stored water to finally dispense cold water of a predetermined temperature.

The provision of such means enables more than just the dispense of chilled water. A known problem in the art of in-situ ozone generation using ambient air is that the higher the humidity of the air entering the ozone generator, the lower the ozone production rate. For this reason, such ozone generation systems generally also comprise means for drying the air entering the ozone generator. Such means are typically very low temperature air chilling equipment or columns filled with drying material such as silica gel. These are either expensive or require monitoring and periodic change by the user when expended.

Thus, in a still further preferred embodiment in which an air-ozone gaseous mixture is used to pre-treat water which is subsequently stored and chilled, the air to be used in said ozone generation system is first passed through heat exchange or other air cooling means which are cooled by the chilled storage water tank, so as to bring the dew point temperature of the air to a controlled, predetermined value, lower than that of the ambient air. In this manner, a portion of the humidity present in the ambient air is removed and the ozone generator system is always operated with air of predetermined humidity. The water which accumulates within the heat exchange means may be removed from the air stream by means of various designs of traps known in the art for the separation of water or oil droplets from an air stream. Other means for drying the air may be conceivable.

In a still further preferred embodiment, the above mentioned means of cooling are equipped with a thermocouple or other electronic means for sensing the temperature of the water in the storage vessel, and said cooling and control means are controlled by a microprocessor which also controls the operation of the means of ozone generation. Further, the program for said microprocessor may contain algorithms that relate the time required for treatment of the water in the ozonation chamber to the temperature of the water in the storage vessel. Said algorithms are specific to the particular means of ozonation and design of the ozonation reaction chamber. The value of the temperature is an indication of the humidity of the air to be used in the ozone generator.

To determine said algorithm, it is necessary to first determine the relationship between the amount of ozone produced per hour (ozone production rate) by a given means of ozone generation and the moisture content of the air entering the means of ozone generation. In a second step for a given design of ozonation reaction chamber, the exposure time required for pre-treatment of inlet water of a given SDI is determined as a function of the ozone production rate. Finally, the algorithm contains a table of standard known values of the maximum moisture content of air of a given temperature. By programming techniques known in the art, it is then possible for the microprocessor to relate the required time of operation of the ozone reaction chamber to the value of the temperature of the water, as sensed by its means of control for the temperature of the water storage vessel.

According to still a further preferred embodiment of the invention, the activated carbon filter elements preferably have a pore size smaller than 5 microns and are fabricated in an appropriate thickness from a combination of known grades of carbon, such as coconut shell derived activated carbon.

Since the retention performance of an activated carbon filter is a complex function of the specific formulation of activated carbon grades, wall thickness, porosity, pore size, and flow rate, the inventors have determined that preferred performance activated carbon filters for the instant invention can be distinguished by testing their retention of surrogate molecules in a defined range of flow. Under filtration conditions such that the filtration rate, expressed in milliliters/minute, divided by the surface area of the filter, expressed in square centimeters, is in the range 0.5-10 cm/minute, dilute solutions of either potassium phthalate or chloroform are particularly useful for this purpose.

Thus, in a preferred embodiment, activated carbon filter elements which display at least 95% retention of a 20ppm solution of potassium phthalate, or a retention capacity of more than 70% for a solution of 300 ppb chloroform , are used. Since chloroform is very soluble in aqueous solution, it is especially useful as a surrogate measure of the filter's ability to retain other difficult to remove organic molecules dissolved in water. Thus, carbon filters displaying more than 70%, and more preferably, 95% of such a solution of chloroform have been found to be specifically adapted to absorb organic material and thereby improve throughput of the microporous membrane in the instant invention.

These parameters are achieved at a flow velocity in the range of 0,5 to 10cm/min. This flow velocity corresponds to a flow rate in cl per minute divided by the nominal filter surface in square centimeters.

The submicron membrane filter element may be any of those known in the art for aqueous filtration, and may include microfiltration, ultrafiltration, nanofiltration and reverse osmosis devices in flat sheet, pleated, spiral wound or hollow fine fiber membrane packaging geometry. In one preferred embodiment, the submicron membrane may have a pore size of about 0,2 micrometers, contained in dead-ended geometry within a filter housing possessing an inlet and filtered water outlet, such that all the water entering the housing inlet must exit through the filtered water outlet.

In another preferred embodiment, microfiltration, ultrafiltration, nanofiltration or reverse osmosis membranes are contained in tangential flow (or crossflow) geometry within a filter housing which has an inlet, an outlet for the concentrated portion of the inlet water, and a second outlet for membrane filtered water. The apparatus containing such a housing is equipped with appropriate valves such that only a predetermined fraction of the water entering the inlet (the recovery ratio) is forced through the membrane -filtered water outlet, while the remainder flows over the surface of the membrane after which it is allowed to exit from the high pressure side of the housing. In such an embodiment, the main advantages of the instant invention lie in the increased time period between cleaning cycles and higher average performance over time of use for salt rejection in the case of reverse osmosis membrane devices, as well as operation at a higher rate of recovery.

In a further aspect of the present invention, a disposable filter cartridge with inlet and filtered water outlet ports, and having a submicron membrane, preferably contained in dead-ended geometry within a permanently sealed filter housing, is provided for use in an apparatus as disclosed above. The flat sheet membrane has an active surface of between 150 - 500 cm$^2$ and preferably has a throughput capacity of 6 - 15 m$^3$ of raw water when it is pre-treated in an apparatus as disclosed above. Typically, the inlet and outlet ports of said disposable filter cartridge are designed to be easily inserted into and removed from an apparatus as disclosed above, such that the hydraulic integrity of the system is maintained. The app aratus according to the invention is provided with means for insertion of such a cartridge. The method according to the present invention is used for pre-treating and purifying water. The raw water is pre-treated with ozone for a predetermined period of time, typically between 2 and 30 minutes, and by filtration with activated carbon. Afterwards, the pre-treated water is filtered by a submicron membrane filter. Before the pre-treatment and/or between the pre-treatment and submicron membrane filtration, other treatments of the water may be possible. It is possible and even preferable to treat the raw water to be purified by a sediment removal filter. It is also possible to treat the water with an activated carbon filter before and after the ozone treatment, such that the ozone treatment takes place between two treatments with activated carbon.

Typically, the water may be treated with air with an ozone concentration of less than 0,45% (wt/wt). Especially, the organic contaminants in the raw water may be chemically modified by the ozone into a form that is capable of being easily removed with an activated carbon filter. Thereby, the SDI of the water can be reduced to values below 3.

The device according to the present invention is especially suitable for point of use application. Due to its limited size, it may be easily attached to a raw water outlet in a building. It is especially preferable to use disposable cartridges with a microporous membrane in the device according to the invention. Typically, at the beginning of the lifetime of such a 0.2 micron membrane cartridge containing 300 square centimeters of surface area, when operated at a constant flow rate of 2 liters per minute, there exists an initial pressure drop of about 0.8 bar across the membrane. After throughput of typically 6 - 10 m$^3$ of water, in a device according to the present invention, this pressure drop may have risen to a value of 5 bars. The pressure drop across the membrane may be monitored and when such a drop is achieved, the user may be instructed to replace the disposable cartridge containing the membrane. According to a further aspect of the invention, a disposable cartridge having such a membrane is provided. Such membrane may be used in context with a method and a device as outlined above.

The object and features of the present invention will become more readily apparent from the following detailed description of the preferred embodiments taken in conjunction with the accompanying drawings in which:

Figure 1:    A schematic representation of an apparatus according to the invention,

Figure 2:    A more detailed representation of an apparatus according to the invention and

Figure 3:    a schematic view of an ozone generator according to the invention.

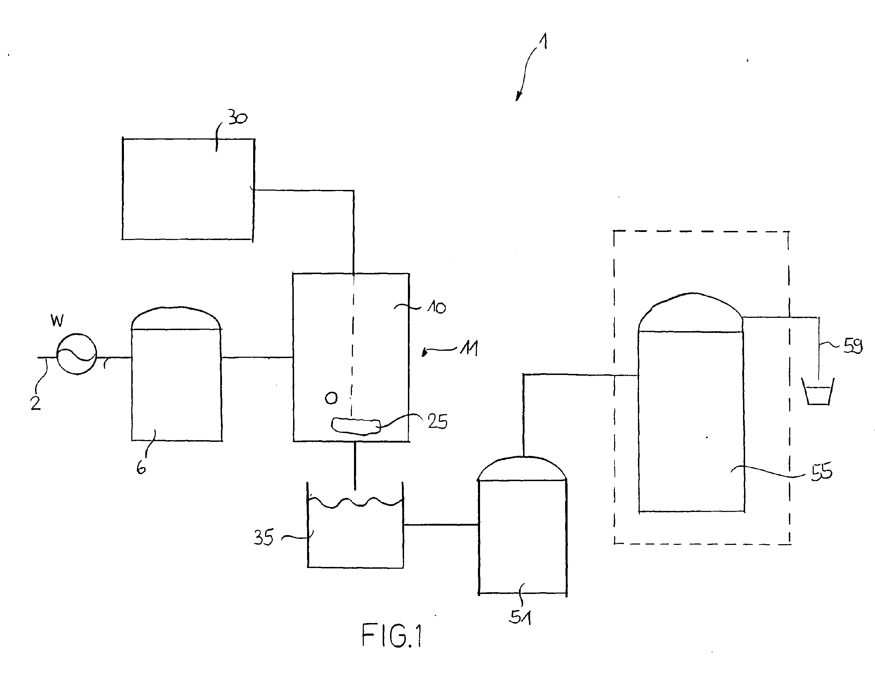

In Figure 1, there is schematically shown an apparatus 1 for the purification of raw water W. The raw water W is fed to the apparatus 1 through raw water inlet 2.

The inlet 2 is connected to a first cartridge 6 having an activated carbon filter for prefiltration of the raw water W. The water is then fed to an ozone reaction chamber 11. The ozone reaction chamber 11 has a column 10. A porous bubble stone 25 is arranged at the bottom of the column 10. An ozone generator 30 is producing ozonated air which is fed into the ozone reaction chamber 11.

The ozonated water is then fed into a storage tank 35. From the storage tank 35, the water is fed into a second activated carbon filter 51. After the filtration in the second activated carbon filter 51, the pre-treated water is fed to a submicron membrane filter arrangement 55. The purified water may be taken from an outlet 59.

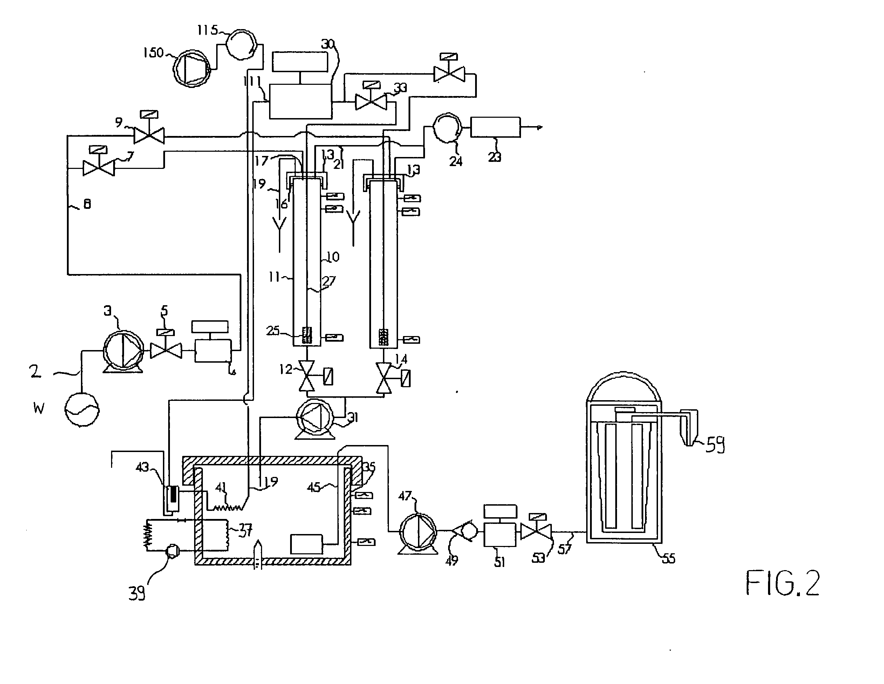

Figure 2 shows a more detailed representation of an embodiment of the invention. A water supply is providing water which is fed into inlet pump 3, and inlet solenoid valve 5, whos e operations are controlled by microprocessor 127, shown in Figure 2. The inlet valve 5 is connected to the first prefilter 6 for prefiltration of the raw water W.

Prefilter 6 consists, in one typical embodiment, of a sealed filter housing capsule, containing an activated carbon filter cartridge element, of the type consisting of a column of granulated activated carbon particles, such as sold by Cuno Inc. (USA). Raw water enters the cartridge element from openings arranged at the bottom and purified water exits from the top of the cartridge that is connected to the housing outlet.

In particular, the filter cartridge element of prefilter 6 may be of a type as sold by KX Industries Ltd., in which the carbon particles have been fused into a solid, tubular block, with a pore size of less than 10 μm and a wall thickness from 10 to 50 mm. This porous tubular style of filter element operates in a radial flow mode, in which water is filtered through the porous thickness of the tube face, enters the central tube drain hole and exits the filter at the top. Whether the filter element operates in the column or radial filtration mode, it is preferable for the water to be first filtered through a number of layers of sediment-removing media, as are known in the art, such as non-woven fabrics, microfiberglass media and the like.

In the embodiment shown in Figure 1, the prefiltered water is fed through pipe 8 and solenoid valves 7 and 9 and cap 13 into either of two identical tubular ozone reaction chambers 11 and 15, each of which can treat up to 40 liters of water in a batch. Emptying of the chambers is carried out by solenoid valves 12 and 14 and pump 31. Solenoid valves 7, 9, 12 and 14 and pumps 3 and 31 are controlled by microprocessor 127, which is programmed to operate ozone reaction chambers 11 and 15 in tandem, such that when one unit is being filled, the other is in ozonation operation. Minimum and maximum liquid level indicators in the reaction chambers (LS-4,5,6, LS-6, LS-1,2,3) provide microprocessor 127 with feedback regarding the liquid level (volume) in each chamber.

The flow rate supplied by pump 3, and the composition and size of the filter elements in prefilter 6, have all been chosen to fulfill the two requirements that (a) at the desired rate of fill, the fill rate divided by the nominal surface area of the activated carbon filter element is in the range of 0.5 - 10 cm/min, and (b) the filter demonstrates at least 70% retention of a 300ppb solution of chloroform.

Ozone reaction chambers 11 and 15 are identical in design, which shall be described for chamber 11. A vertical column 10 is closed at its bottom by solenoid valve 12, and at its top by an airtight removable cap 13 that is sealed to column 10 by an O-ring 16. Cap 13 contains a filling entrance for prefiltered water 17, an over flow tube 19 leading to a drain, and tube 21 leading to an air flow switch 24 which, when activated, feeds back a signal to microprocessor 127 to verify that a minimum predetermined air flow rate is leaving the chamber. The air stream exiting flow switch 24 passes through an activated carbon air filter 23, such as that produced by Cuno Inc., which removes any ozone present and prevents the build-up of ozone in the vicinity of the apparatus.

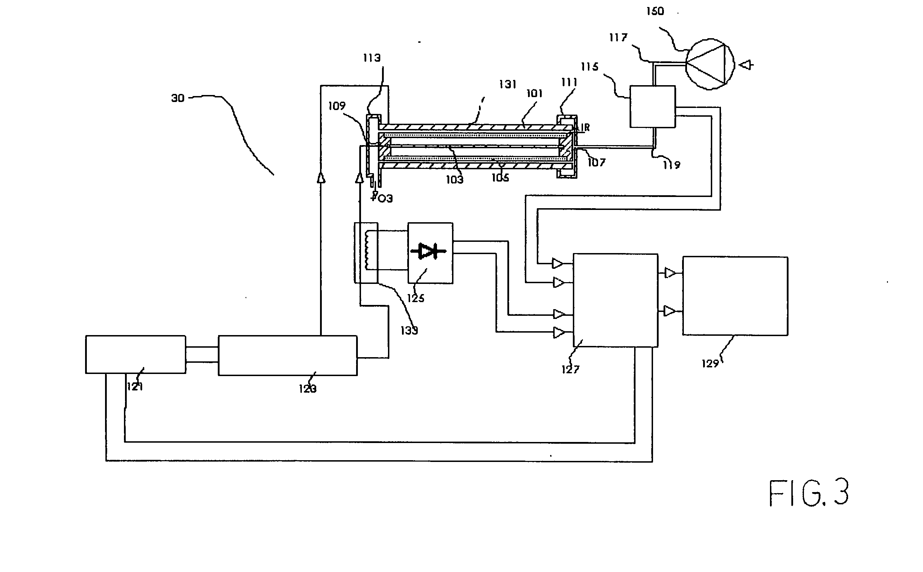

A porous bubble stone25 is arranged at the bottom, at approximately the center of column 10. It is connected by tube 27, which passes through (and is sealed into) cap 13, to solenoid valve 33, which is attached to the exit of ozone generator 30, shown in greater detail in Figure 3. Ozone generator 30 typically produces ozonated air with a production rate up to 1.5 g of ozone/hour, and is operated with an air flow such that the concentration of air exiting the generator is less than 0.45% (wt./wt).

The ozonated water is transferred by pump 31 from ozone reaction chambers 11 and 15 into a storage tank 35. Minimum and maximum liquid level sensors in storage tank 35 are used to provide feedback to microprocessor 127 to regulate the action by solenoid valves 12 and 14 and pump 31. Tank 35 may also be equipped with a heat exchanger coil 37 and compressor 39 or other means for chilling and controlling the temperature of stored water if cooled water is desired. Preferably, compressor 39 is controlled by microprocessor 127 by conventional temperature measurement means such as a thermocouple (not shown) located in storage tank 35.

In a further preferred embodiment, in which tank 35 is equipped with means for chilling stored water, it may also be equipped with a heat exchange coil 41, which is attached to tube 119 on one side, and to the inlet of condensation trap 43 on its exit. The exit tube from condensation trap 43 is attached to inlet cap 107 of ozone generation tube 131 (see Fig. 3). Thus, the air reaching the ozone generation tube is at a predetermined temperature, with a dew point temperature that is independent of the ambient operating temperature. The advantage of such an embodiment is that the ozone production rate of the ozone generator remains relatively stable and does not fluctuate according to the moisture content of the ambient air.

Via pipe 45 located in storage tank 35, and constant flow pump 47, which is controlled by microprocessor 127, water stored in tank 35 is pumped through one-way valve 49, and solenoid valve 53, which is also controlled by microprocessor 127. The stored, ozone-treated water is pumped at constant flow rate through activated carbon prefilter 51, which is generally similar to prefilter 6, although it may differ in physical size and filter surface area.

It has been found (see EP 1 034 138) that the particle removal efficiency of the microfiberglass media in the prefilters depends on the linear velocity of the water to be treated. Best removal may be achieved with specific linear velocities. The linear velocity of the water thus is typically selected in a way as disclosed in EP 1 034 138 which is incorporated herein by reference, taking into account the capacity of the constant flow pump 47.

Prefilter 51 serves to remove a difficult to remove fraction of naturally occurring organic matter present in the raw inlet water, which has passed through prefilter 6 and subsequently undergone reaction with ozone. In this reacted form, it is removed by prefilter cartridge 51. In addition, prefilter 51 also serves to filter out any inorganic particles caused by the oxidative action of the ozonation process on soluble ferrous or manganous ions which are present in some naturally occurring water supplies. These ions are oxidized to the ferric or manganic oxidation state, and precipitate as colloidal particulate hydroxides.

After the filtration in the second activated carbon prefilter 51, the pre-treated water is fed through a pipe 57 to the inlet of a submicron membrane filter cartridge arrangement 55. In the embodiment of Figure 1, cartridge 55 is a dead-ended geometry, microporous membrane filter element. It consists of a 0.2 $\mu$m polysulphone membrane, with 200-500 square centimeters of membrane surface area, which has been integrally sealed in a cylindrical pressurizable plastic housing.

Upon pressing a button to provide the appropriate signal to microprocessor 127, the purified water is dispensed from an outlet 59. Typically 2 litres of water may be dispensed per minute with a device according to the embodiment of the invention shown in Figure 2.

Referring to Figure 3, the hydraulic portion of ozone generator 30 consists of air pump 150, which is controlled by microprocessor 127 and pumps air at a flow rate of between 1-10 liters per minute through pipes 117 and 119, and flow switch 115, to end cap 111 of an ozone generation tube 131. Ozone generation tube 131 is of general commercial design for this purpose, by Sonking Ltd., Taiwan, and consists of a metal, preferably stainless steel, tube 101, which also serves as one electrode. Concentric with tube 101 is a second metal electrode 103, which is separated from tube 101 by tube 105, which is also concentric with both tube 101 and electrode 105, and is fabricated from a dielectric insulator material such as glass. Tube 105 and electrode 103 are physically held in place and maintained in a concentric geometry at both ends of tube 101 by insulating elements 107 and 109, typically fabricated from plastic material. End-caps 111 and 113 physically close the ends of tube 101, thereby creating an entrance and exit respectively for gas flow. End-cap 113 is attached to solenoid valve 33 (see Figure 2), which is controlled by microprocessor 127.

Ozone is generated in the ozone generation tube when an elevated alternating voltage of the correct frequency is applied to tube 101 and electrode 103 by energizing power supply 121 and coil 123, whose operation is controlled by microprocessor 127. Upon application of the high voltage alternating electrical field, ionization reactions take place in the air gap between stainless steel tube 101 and dielectric tube 105, thereby creating ozone and other chemical species. Ionization also takes place between electrode 103 and dielectric 105, such that a closed electrical circuit with a small alternating current is created between coil 123 and ozone generation tube 131.

Transformer 133 and voltage bridge 125 produce a voltage signal whose magnitude is proportional to this current, which is only flowing when air is ionized and ozone is created. The signal from bridge 125 is fed back to microprocessor 127, as is the signal from flow switch 115 which, when activated, indicates that a predetermined minimum flow of air is being pumped through the ozone generator. The microprocessor circuit uses the combination of both of these inputs to alert the operator as regards malfunction in the ozone generation system. This may include visual and audio alert means, as well as disenabling of the apparatus from dispensing water until the malfunction is corrected.

Once the ozone reaction chamber (either 11 or 15 according to the cycle) is filled to the predetermined volume, microprocessor 127 activates pump 150 and power supply 121 so that the air/ozone mixture bubbles into the reaction chamber and treats the water for a predetermined period of time from 2 to 30 minutes, which is specified in the program of microprocessor 127. In a preferred embodiment of the invention, microprocessor 127 is provided with algorithm means in the operating program to calculate the treatment time, in accordance with the temperature of storage tank 35. The length of the treatment period chosen depends in part on the concentration of the organic matter in the raw water, the volume of the reaction chambers, and the specific concentration of the ozone in the air/ozone mixture and the air/ozone mixture flow rate.

In a preferred embodiment, the time of treatment,t, calculated by microprocessor 127 is given by equation (1):

$$t \geq K \times V / O(T) \qquad (1)$$

where K is a constant, V is the volume of the ozone reaction chamber and **O(T)** is the function for the ozone production rate dependence on the temperature of the storage tank 35.

**Claims**

1. An apparatus (1) for purifying water, comprising an ozone reaction chamber (11) and means for generation of ozone (30) for pre-treatment of said water (W) with ozone (O) and

   - at least one filtering device , wherein said filtering device contains a submicron membrane filter (55) arranged after said ozone reaction chamber (11), and,
   - at least one further filtering device, (6, 51)

     wherein said further filtering device is an active carbon filter (6, 51)
     where said active carbon filter (51) is located upstream of said filter (55), preferably between said ozone reaction chamber (11) and said submicron membrane filter (55).

2. An apparatus (1) according to claim 1, wherein said apparatus (1) further comprises a sediment removal filter arranged upstream of the raw water inlet (2) of said apparatus (1).

3. An apparatus according to one of the claims 1 or 2, wherein a second activated carbon filter (6) is arranged before said ozone reaction chamber (11) such that the ozone reaction chamber is situated in between the two activated carbon filters (6,51).

4. An apparatus according to one of the claims 1 to 3, wherein said ozone reaction chamber (11) comprises means (150,30) for generation of ozone-enriched air, preferably at a rate of 0.1 to 1.5 grams of ozone per hour.

5. An apparatus according to claim 4, wherein said means (150,30) for generation of ozone-enriched air have a pump (150) adapted to produce an ozone concentration in air of less than 0,45% ozone by weight.

6. An apparatus according to claims 4 or 5, wherein said means for generation of ozone-enriched air are a bubble reactor column (11), preferably with a ratio of height to diameter greater than 5 to 1.

**7.** An apparatus according to claim 6, wherein the bubble reactor column (11) has a porous bubble stone (25), preferably arranged at the bottom and center of said column (11).

**8.** An apparatus according to one of the claims 3 to 7, wherein said activated carbon filters (6, 51) comprise filter housings with tubular activated carbon block filter elements, preferably with a pore size smaller than 5 micron.

**9.** An apparatus according to one of the claims 3 to 8, wherein said activated carbon filter elements (6, 51) are adapted to adsorb organic material, and have a retention of >95% of a 20ppm solution of potassium phthalate, and/or a chloroform retention of >70% when tested with a solution of 300ppb of chloroform, at a flow velocity in the range of 0.5 - 10 cm/minute.

**10.** An apparatus according to one of the claims 1 to 9, wherein the submicron membrane filter (55) has a pore size of about 0,8 micrometers or less.

**11.** A method for purifying water at the point of use, comprising the steps of

- pre-treating said water with ozone
- pre-treating said water with an activated carbon filter (6,51),
- filtering said purified water in a submicron membrane filter (55),

wherein said pre-treatment steps are preferably performed in the above order.

**12.** A method according to claim 11, wherein raw water (W) to be purified is first pre-treated in a sediment removal filter.

**13.** A method according to one of the claims 11 or 12, wherein said water (W) is treated with a second activated carbon filter (6) before said ozone treatment, such that the ozone treatment takes place between the two activated carbon filtering processes.

**14.** A method according to one of the claims 11 to 13, wherein said water (W) is treated for a predetermined period of time with air with an ozone concentration of less than 0,45% by weight.

**15.** A method according to one of the claims 11 to 14, wherein organic material present in said raw water (W) is chemically modified by said ozone treatment into a fo rm capable of being more easily removed with an activated carbon filter (51), the method comprising the further step of filtering the ozone-treated water with an activated carbon filter thereby reducing the SDI of said water to values below 3.

**16.** The use of a device having at least one filtering device in the form of an activated carbon filter (6, 51) and an ozone reaction chamber (11) arranged in series with each other for pre-treating water for increasing the throughput through a submicron membrane (55) having a nominal pore size in the range of 10 nanometers to 1 micrometer.

**17.** A disposable cartridge having a submicron membrane for use in an apparatus according to one of the claims 1 to 10, said membrane of said cartridge having a pore size in the range of 10 nanometers to 1 micrometer, an active surface of less than 500 $cm^2$ and having a throughput capacity of at least 6 $m^3$ of raw water when pre-treated in an apparatus (1) according to one of the claims 1 to 10.

**18.** A cartridge having a membrane according to claim 17, wherein said cartridge is adapted to be removably inserted into an apparatus according to one of the claims 1 to 10.

**19.** An apparatus (1) according to one of the claims 1 to 10, having at least two ozone reaction chambers (11, 15) connected in parallel to each other, for pre-treatment of said water.

**20.** An apparatus (1) according to claim 19, wherein the ozone reaction chambers (11, 15) include indicators of the liquid level within said chambers (11, 15), preferably electrical or electronic indicators.

**21.** An apparatus (1) according to one of the claims 19 or 20, wherein the apparatus further comprises valve means and pump means for operating said apparatus (1), and a microprocessor or programmable microcomputer (127) operatively coupled to said pump means and valve means, wherein the operation of said apparatus (1) is controlled by said microprocessor or programmable microcomputer (127).

**22.** An apparatus (1) according to one of the claims 1 to 10 or 19 to 21, wherein said apparatus (21) further comprises cooling means (37, 41) and temperature control means (37) for cooling ozone-treated water in a storage tank (35).

**23.** An apparatus (1) according to one of the claims 1 to 10 or 19 to 22, wherein the apparatus (1) has heat exchange means (41) arranged in a storage tank (35) for bringing the temperature of an air stream entering an ozone generator (30) from ambient temperature to a temperature corresponding substantially to the temperature of the water in said stor age tank (35).

**24.** An apparatus (1) according to one of the claims 1 to 10 or 19 to 23, wherein the apparatus comprises means (43) for drying an air stream entering an ozone generator (30), preferably means for cooling said air stream and means for removing condensed water.

**25.** An apparatus (1) according to claim 21 and one of the claims 22 or 23, wherein cooling means (37) and temperature control means (41) are in operative connection with said microprocessor or programmable microcomputer (127).

**26.** An apparatus (1) according to claim 25, wherein said microprocessor or programmable microcomputer (127) is adapted to adjust ozonation treatment time of said ozone reaction chambers (11, 15) depending on the temperature of the water in said storage tank (35).

**27.** A method according to one of the claims 11 to 15, wherein said ozone-treated water is stored in a storage tank (35) and cooled to a predetermined temperature.

**28.** A method according to one of the claims 11 to 15 or 27, wherein air fed to a ozone generator (30) is dried, preferably by cooling the air.

**29.** A method according to one of the claims 11 to 15 or 27 to 28, comprising the steps of cooling the air fed to an ozone generator (30) in a cooling device, measuring the temperature of the air exiting said cooling device and adjusting the time of ozonation of said water in dependence of said air temperature.

**30.** An apparatus according to claim 24, wherein the apparatus comprises means for measuring the temperature of the air exiting said cooling device and means for adjusting the ozonation time in dependence of said temperature.

FIG.1

FIG.2

FIG.3

**European Patent Office**

**EUROPEAN SEARCH REPORT**

Application Number

EP 04 00 0105

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 259 972 A (MIYAMARU HITOSHI ET AL) 9 November 1993 (1993-11-09) * figures 1,2 * | 1,11,16, 17 | C02F1/44 C02F1/78 C02F9/02 |
| X | US 6 183 646 B1 (NICKSON PETER WILLIAM ET AL) 6 February 2001 (2001-02-06) * abstract; figure 1 * | 1,2,11, 12,16,17 | |
| X | PATENT ABSTRACTS OF JAPAN vol. 1999, no. 12, 29 October 1999 (1999-10-29) -& JP 11 197656 A (ARUSOA OUSHOU:KK), 27 July 1999 (1999-07-27) * abstract * | 1,2,11, 16,17 | |
| X | PATENT ABSTRACTS OF JAPAN vol. 2000, no. 23, 10 February 2001 (2001-02-10) -& JP 2001 170688 A (JAPAN ORGANO CO LTD), 26 June 2001 (2001-06-26) * abstract * | 1,3,11, 13,16,17 | |
| X | FR 2 788 054 A (ANJOU RECH) 7 July 2000 (2000-07-07) * page 7, line 26 - page 8, line 16; figures 1,2 * | 1,2,11, 12,16,17 | TECHNICAL FIELDS SEARCHED (Int.Cl.7) C02F |
| A | US 4 599 166 A (GESSLAUER RUDOLF) 8 July 1986 (1986-07-08) * figure 1 * | 20-30 | |
| A | DATABASE WPI Section Ch, Week 200405 Derwent Publications Ltd., London, GB; Class D15, AN 2004-047105 XP002281427 -& JP 2003 313010 A (CENTRAL CONVEYOR KK) 6 November 2003 (2003-11-06) * abstract * | 21-30 | |

The present search report has been drawn up for all claims

| Place of search | Date of completion of the search | Examiner |
|---|---|---|
| Munich | 26 May 2004 | Borello, E |

**ANNEX TO THE EUROPEAN SEARCH REPORT
ON EUROPEAN PATENT APPLICATION NO.**                    EP 04 00 0105

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2004

| Patent document cited in search report | | Publication date | Patent family member(s) | | Publication date |
|---|---|---|---|---|---|
| US 5259972 | A | 09-11-1993 | JP | 4090885 A | 24-03-1992 |
| | | | JP | 7090219 B | 04-10-1995 |
| | | | DE | 4125541 A1 | 06-02-1992 |
| US 6183646 | B1 | 06-02-2001 | GB | 2303316 A | 19-02-1997 |
| | | | AU | 709442 B2 | 26-08-1999 |
| | | | AU | 6941596 A | 18-02-1997 |
| | | | BR | 9609772 A | 26-01-1999 |
| | | | CA | 2227206 A1 | 06-02-1997 |
| | | | DE | 69608448 D1 | 21-06-2000 |
| | | | DE | 69608448 T2 | 11-01-2001 |
| | | | DK | 843650 T3 | 28-08-2000 |
| | | | EP | 0843650 A2 | 27-05-1998 |
| | | | ES | 2148788 T3 | 16-10-2000 |
| | | | GB | 2326113 A ,B | 16-12-1998 |
| | | | WO | 9703926 A2 | 06-02-1997 |
| | | | JP | 11510089 T | 07-09-1999 |
| | | | NO | 980220 A | 16-03-1998 |
| JP 11197656 | A | 27-07-1999 | JP | 3237011 B2 | 10-12-2001 |
| JP 2001170688 | A | 26-06-2001 | NONE | | |
| FR 2788054 | A | 07-07-2000 | FR | 2788054 A1 | 07-07-2000 |
| | | | AU | 1986900 A | 24-07-2000 |
| | | | WO | 0040514 A1 | 13-07-2000 |
| US 4599166 | A | 08-07-1986 | NONE | | |
| JP 2003313010 | A | 06-11-2003 | NONE | | |

EPO FORM P0459

For more details about this annex : see Official Journal of the European Patent Office, No. 12/82